# EUROPEAN PATENT APPLICATION

(11) **EP 2 293 220 A2**
(43) Date of publication of application: **09.03.2011**
(21) Application number: 10173707.0
(22) Date of filing: 23.08.2010
(51) Int. Cl.: G06K 7/10, G06K 7/12, G06K 19/06, G06K 19/08

(54) **Method and device for reading reproduced image**

(30) Priority: 24.08.2009 JP 2009193394
(71) Applicant: Fujifilm Corporation, Minato-ku Tokyo (JP)
(72) Inventor: Kurose, Minoru, Saitama (JP); Yokoyama, Junichi, Saitama (JP); Noguchi, Yasuhiro, Saitama (JP); Nagashima, Takashi, Saitama (JP); Ueki, Nobuaki, Saitama (JP); Nagasaki, Hiroyuki, Saitama (JP); Amimori, Ichiro, Kanagawa (JP); Takahashi, Kouki, Kanagawa (JP)
(74) Representative: Klunker . Schmitt-Nilson . Hirsch

(57) **Abstract**

A first bar code that is reproduced by linearly polarized red light (first read light) (L1) parallel to a short-side direction and a second bar code that is reproduced by linearly polarized green light (second read light L2) parallel to a long-side direction are recorded on a birefringence label (12). A probe (13) is a reading device that reads the first and second bar codes from the birefringence label (12) and includes first and second light sources (21,22) and an imaging unit (23). The first light source (21) emits the first read light (L1) to the birefringence label. The second light source (22) emits the second read light (L2) to the birefringence label (12) at a time different from that of the first read light. The imaging unit (23) captures the birefringence label (12) through a polarizing plate (36) having a transmission axis aligned with the short-side direction of the birefringence label, and acquires the reproduced images of the first and second bar codes.

## Description

### BACKGROUND OF THE INVENTION

### 1. Field of the Invention

The present invention relates to a method and device for reading data from a recording medium in which a plurality of data is recorded on the same position so as to overlap each other, and more particularly, to a method and device for reading a plurality of images from a recording medium from which different images are reproduced according to the polarization direction of emitted linearly polarized light.

### 2. Description of the Related Art

A point-of-sale information management system (POS system) has been known which collects information, such as the names or prices of articles that were sold, the number of articles, and the date and time when the articles were sold. For example, the information obtained by the point-of-sale information management system is used to determine the number of articles to be purchased. In addition, the management system has been introduced into various fields, such as the management of articles in the manufacturing industry or the distribution industry, in addition to the retail industry.

In the above-mentioned system that manages a plurality of articles, it is necessary to identify each article at an appropriate timing during sale. Therefore, each article is marked. In the point-of-sale information management system, for example, a bar code is attached to each article, and the ID of the article is read from the bar code. In this way, each article is identified. In addition, as a marking label used in the management system, the following has been known: a line-and-space-type bar code; a two-dimensional code that includes information more than the bar code; and an IC tag. In the case of the IC tag, since information is read by wireless communication, the read range is wide, and it is possible to read a plurality of information items from the IC tag at the same time.

In recent years, a label (hereinafter, referred to as a birefringence label) has been proposed on which information is recorded by the distribution of a birefringence material (JP-A-2007-001130 (corresponding to US 2010/0123943 A) and JP-A-2009-069793 (corresponding to US 2008/0143926 A)). Information is recorded on the birefringence label by distributing the birefringence material in the in-plane direction and the thickness direction. When linearly polarized light is incident, it is possible to observe information corresponding to the polarization direction and wavelength of the incident linearly polarized light. In addition, a technique has been known which changes the distribution of the birefringence material to record a plurality of information items corresponding to various kinds of linearly polarized light components with different polarization directions or wavelengths at the same position of the birefringence label so as to overlap each other. For example, when a plurality of image information items is recorded at the same position so as to overlap each other, linearly polarized light with a predetermined polarization direction and a predetermined wavelength is observed to selectively observe only an image corresponding to the linearly polarized light used in the observation among the plurality of overlapped image information items. It is expected that the birefringence label on which a plurality of information items is recorded at the same position so as to overlap each other will be used as the marking label, instead of the bar code.

As described above, when information is read from the marking label attached to the article, different reading devices corresponding to the aspects of the labels that are used are required. When information is read from the bar code, a so-called bar code reader is used. For example, the bar code reader emits read light to the bar code, binarizes the intensity distribution of light reflected from the bar code, and reads the pattern of the bar code. In the case of the two-dimensional code, the pattern of the two-dimensional code is identified from the captured image of the two-dimensional code and is decoded by a predetermined logic. In this way, information recorded on the two-dimensional code is read. The IC tag wirelessly transmits its own information to a receiver, and the receiver receives the information and reads the information recorded on the IC tag.

As described above, information is recorded on the birefringence label in a different way from that in which information is recorded on a known label, such as the bar code, the two-dimensional code, or the IC tag. Therefore, it is difficult for the reading device that reads information from the existing label to read information from the birefringence label. In particular, in the case of the birefringence label, even though the image of the birefringence label is captured, it is difficult to acquire the information recorded on the birefringence label as an image.

In the birefringence label on which a plurality of information items is recorded so as to overlap each other, it is possible to capture the image of the birefringence label and read one of the recorded information items as an image, but it is difficult to read other overlapped information items. In addition, even though the images of a plurality of information items are captured at the same time, it is difficult to identify the information items one by one since the information items overlap each other.

### SUMMARY OF THE INVENTION

The invention has been made in order to solve the above-mentioned problems, and one embodiment of the invention provides a method and device for individually reading information items from a birefringence label on which a plurality of information items is recorded so as to overlap each other.

According to an aspect of the invention, a reproduced image reading device includes a first light source, a second light source and a light receiving unit. The first light source emits first read light, which is linearly polarized light having a predetermined polarization direction and a predetermined wavelength, to a recording medium. Different images are reproduced from the recording medium based on a polarization direction and a wavelength of linearly polarized light emitted thereto. The second light source emits second read light having a polarized state, a polarization direction, and a wavelength, at least one of which is different from that of the first read light, to the recording medium at a time different from that of the first read light. When at least the first read light is emitted, the light receiving unit receives light from the recording medium through a polarizing filter having a transmission axis that is aligned with such a direction that linearly polarized light having the polarization direction of the first read light passes though the polarizing filter.

The light receiving unit may include one optical sensor common to the first read light and the second read light.

The light receiving unit may include a first optical sensor and a second optical sensor. The first optical sensor has the polarizing filter provided on a front side thereof, receives the light from the recording medium when the first read light is emitted, and reads a reproduced image. The second optical sensor is provided separately from the first optical sensor, receives light from the recording medium when the second read light is emitted, and reads a reproduced image.

The first light source and the second light source may be integrally formed and emit the first read light and the second read light to the recording medium substantially at the same position and substantially in the same direction.

The second read light may be linearly polarized light whose polarization direction is different from that of the first read light.

The second read light may be linearly polarized light that has the same polarization direction as the first read light and has the wavelength different from that of the first read light.

The second read light may be non-polarized light.

The optical sensor and the recording medium may be moved relative to each other to read a reproduced image from one side of the recording medium.

The polarizing filter may be provided so as to be movable between a covering position where the polarizing filter covers a front surface of the optical sensor is covered and an exposure position where the front surface of the optical sensor is exposed. The polarizing filter may be moved to the covering position when the first read light is emitted and may be moved to the exposure position when the second read light is emitted.

The polarizing filter may be provided in front of the optical sensor such that the transmission axis thereof can be rotated to two directions in which the polarizing filter transmits the first read light and the second read light, respectively.

The polarizing filter may be a liquid crystal element that changes the direction of the transmission axis according to a voltage applied to liquid crystal.

According to another aspect of the invention, there is provided a method of reading a reproduced image. The method includes: a first step of emitting first read light, which is linearly polarized light having a predetermined polarization direction and a predetermined wavelength, to a recording medium, wherein different images are reproduced from the recording medium based on a polarization direction and a wavelength of linearly polarized light emitted thereto, and reading the reproduced image corresponding to the first read light; and before or after the first step, a second step of emitting second read light having a polarized state, a polarization direction, and a wavelength, at least one of which is different from that of the first read light, to the recording medium and reading a reproduced image corresponding to the second read light.

According to the above-mentioned aspects of the invention, it is possible to individually read information items from a birefringence label on which a plurality of information items is recorded so as to overlap each other.

### BRIEF DESCRIPTION OF THE DRAWINGS

Fig. 1 is a diagram schematically illustrating the structure of a reading device according to an embodiment of the invention;
Fig. 2 is a block diagram illustrating the optical and electrical structure of the reading device;
Figs. 3A and 3B are diagrams illustrating an aspect in which a bar code is read from a birefringence label when the birefringence label is illuminated by a first light source;
Figs. 4A and 4B are diagrams illustrating an aspect in which a bar code is read from the birefringence label when the birefringence label is illuminated by a second light source;
Fig. 5 is a diagram illustrating an example in which the first light source and the second light source are integrally formed;
Fig. 6 is a diagram illustrating an example in which two imaging units are provided;
Figs. 7A and 7B are diagrams schematically illustrating the outward appearance of a probe that reads information from a transmissive birefringence label;
Fig. 8 is a diagram illustrating the structure of the probe that reads information from the transmissive birefringence label; and
Figs. 9A and 9B are diagrams illustrating the structure of a probe that is suitable when non-polarized light is emitted to a birefringence label.

### DESCRIPTION OF THE PREFERRED EMBODIMENTS

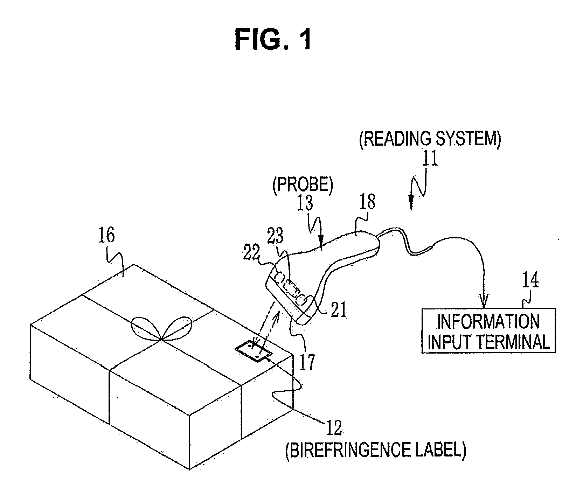

As shown in Fig. 1, a reading system 11 reads each information item from a birefringence label 12 on which a plurality of information items is recorded so as to overlap each other and records the read information. The reading system 11 includes a probe 13 (read device) and an information input terminal 14.

Two kinds of bar code, that is, a first bar code (reproduced image) and a second bar code (reproduced image) are recorded on the birefringence label 12 so as to overlap each other by distributing birefringence bodies in the in-plane direction and the thickness direction. The birefringence label 12 is a reflective birefringence label with a rectangular shape and the distribution of the birefringence bodies is formed on a reflecting film. Therefore, the bar codes recorded on the birefringence label 12 can be observed by light reflected from a reflecting film. The birefringence label 12 is attached to the surface of an article 16 in advance, and the probe 13 reads the first bar code or the second bar code at a predetermined timing, such as during the sale of the article 16.

As described above, the birefringence label 12 includes the birefringence bodies appropriately distributed therein. When linearly polarized light that is polarized in a specific direction and has a specific wavelength is incident, a specific bar code corresponding to the incident light is selectively reproduced as an image. For example, the first bar code is reproduced by linearly polarized red light (hereinafter, referred to as first read light) that is polarized in a direction parallel to the short side. Therefore, the first bar code is visualized by selectively observing reflected light of the first read light through, for example, a polarizing plate. The second bar code is reproduced when linearly polarized green light (hereinafter, referred to as second read light) that is polarized in a direction parallel to the long side is incident on the birefringence label 12. Therefore, the second bar code is visualized by selectively observing reflected light of the second read light through, for example, the polarizing plate. When the birefringence label 12 is observed under natural light (polarized light) without using, for example, the polarizing plate, it is difficult to observe the first bar code and the second bar code.

The probe 13 reads information from the birefringence label 12, and includes a leading end 17 that has a substantially rectangular shape and approaches the birefringence label 12 to capture the image thereof. At the same time as the image is captured, the probe 13 decodes the bar code given to the captured image to acquire information related to the article 16, such as an ID. In this case, the probe 13 approaches the birefringence label 12 while the direction of the leading end 17 is adjusted such that the longitudinal direction of the leading end 17 is aligned with the longitudinal direction of the birefringence label 12. The probe 13 is connected to the information input terminal 14 by a flexible signal transmission cable. The user can hold a holding portion 18 and align the position or direction of the leading end 17 with the birefringence label 12, regardless of the direction or size of the article 16. The information acquired by the probe 13 is input to the information input terminal 14 through the cable.

The information input terminal 14 includes a keyboard or a display (not shown) and inputs information, such as the sale time of the article 16 and the age or sex of the purchaser of the article 16, to a database using the keyboard or the display at the same time as information is read from the birefringence label 12. In addition, the information input terminal 14 stores the input information and the information read from the birefringence label 12 in the database so as to be associated with each other.

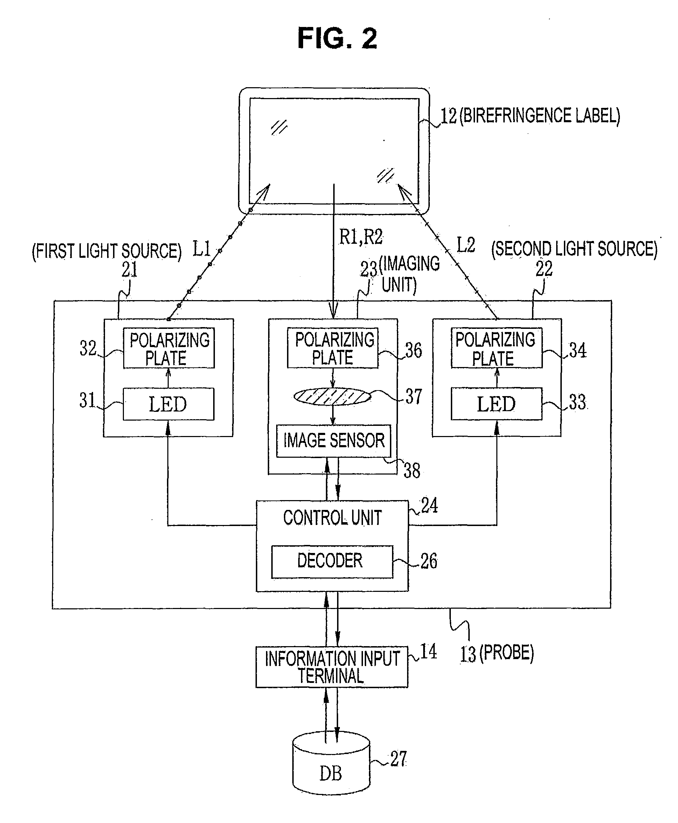

As shown in Fig. 2, the probe 13 includes a first light source 21, a second light source 22, an imaging unit 23 (light receiving unit), and a control unit 24.

The first light source 21 uniformly emits linearly polarized red light to the entire birefringence label 12 substantially from the front side thereof, and includes an LED 31 and a polarizing plate 32. The LED 31 emits red light for reproducing the first bar code to the birefringence label 12. The polarizing plate 32 converts the red light emitted from the LED 31 into linearly polarized light. The polarizing plate 32 is arranged such that the direction of the transmission axis thereof is aligned with the short-side direction of the birefringence label 12 when the probe 13 approaches the birefringence label 12. Therefore, the first light source 21 emits first read light L1 for reproducing the first bar code to the birefringence label 12.

The second light source 22 uniformly emits linearly polarized green light to the entire birefringence label 12 substantially from the front side thereof, and includes an LED 33 and a polarizing plate 34. The LED 33 emits green light for reproducing the second bar code to the birefringence label 12. The polarizing plate 34 converts the green light emitted from the LED 33 into linearly polarized light. The polarizing plate 34 is arranged such that the direction of the transmission axis thereof is aligned with the long-side direction of the birefringence label 12 when the probe 13 approached the birefringence label 12. Therefore, the second light source 22 emits second read light L2 for reproducing the second bar code to the birefringence label 12.

The imaging unit 23 captures the image of the birefringence label 12 using light reflected from the birefringence label 12 and includes a polarizing plate 36 (polarizing filter), a lens 37, and an image sensor 38. The imaging unit 23 is arranged between the first light source 21 and the second light source 22 such that it is disposed substantially in front of the birefringence label 12 when the probe 13 approaches the birefringence label 12. Therefore, when the first read light L1 is emitted to the birefringence label 12, light R1 reflected from the birefringence label 12 is incident on the imaging unit 23 substantially from the front side. When the second read light L2 is emitted to the birefringence label 12, light R2 reflected from the birefringence label 12 is incident on the imaging unit 23 substantially from the front side.

The polarizing plate 36 is arranged such that the direction of the transmission axis thereof is substantially aligned with the short-side direction of the birefringence label 12 when the probe 13 approaches the birefringence label 12, similar to the polarizing plate 32 of the first light source 21. The polarizing plate 36 transmits or absorbs the light components R1 and R2 reflected from the birefringence label 12 according to the polarization direction. The lens 37 focuses light passing through the polarizing plate 36 on the imaging surface of the image sensor 38. The image sensor 38 is a CMOS-type area sensor, and captures the image of the birefringence label 12 using the reflected light components R1 and R2 passing through the polarizing plate 36. The image of the birefringence label 12 that is output from the image sensor 38 is temporarily stored in a memory (not shown).

The control unit 24 controls the overall operation of the probe 13. For example, the control unit 24 controls the turning-on and turning-off of the LED 31 of the first light source 21 or the LED 33 of the second light source 22 or the turning-on and turning-off timing, or controls the operation of the image sensor 38. The control of the operation of the probe 13 is triggered by, for example, the operation of a button (not shown).

The control unit 24 includes a decoder 26. The decoder 26 recognizes the image of the first bar code or the second bar code from the image of the birefringence label 12 captured by the image sensor 38, and decodes the image to acquire information, such as an ID recorded on the recognized bar code. The information acquired from each bar code is transmitted to the information input terminal 14, and is stored in a database (DB) 27 so as to be associated with the information input to the information input terminal 14, as described above.

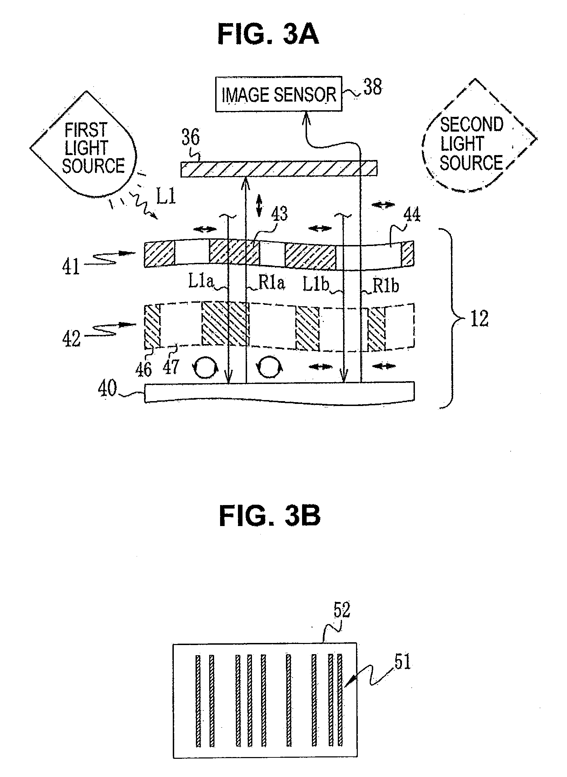

Next, an aspect in which the probe 13 individually reads the first bar code and the second bar code from the birefringence label 12 will be described. As shown in Figs. 3A and 3B, when the probe 13 reads information from the birefringence label 12, first, the LED 31 of the first light source 21 is turned on and emits the first read light L1 to the birefringence label 12. At the same time, the image of the birefringence label 12 is captured by the reflected light of the first read light L1 (first step).

Fig. 3A schematically illustrates the structure of the birefringence label 12. As shown in Fig. 3A, a first recording layer 41 having the first bar code recorded thereon and a second recording layer 42 having the second bar code recorded thereon are formed on a reflecting film 40. In Fig. 3A, the polarized states of the first read light L1 and the reflected light R1 thereof at each point are schematically represented by arrows.

Birefringence sections 43 and isotropic sections 44 are distributed in the first recording layer 41 according to the line and space of the first bar code. When the first read light L1 is transmitted, the birefringence section 43 has a birefringence property that converts the first read light L1 into circularly polarized light. The birefringence section 43 is configured so as to act only on red light. Therefore, the birefringence section 43 substantially acts only on the first read light L1. When non-polarized light, or linearly polarized light with a polarization direction different from that of the first read light L1 or linearly polarized light with a wavelength different from that of the first read light L1, such as the second read light L2, is incident on the birefringence section 43, the birefringence section 43 has an isotropic property and transmits substantially the same polarized light as the incident polarized light. The isotropic section 44 is configured so as to have an isotropic property with respect to both the first read light L1 and the second read light L2. Therefore, the first read light L1 incident on the isotropic section 44 passes through the isotropic section 44 while maintaining the same polarized state as that when it is incident.

Similarly, birefringence sections 46 and isotropic sections 47 are distributed in the second recording layer 42 according to the line and space of the second bar code. When the second read light L2 is transmitted, the birefringence section 46 has a birefringence property that converts the second read light L2 into circularly polarized light. The birefringence section 46 is configured so as to act only on green light. Therefore, the birefringence section 46 substantially acts only on the second read light L2. When the first read light L1 is incident on the birefringence section 46 of the second recording layer 42, the first read light L1 passes through the birefringence section 46 while maintaining the same polarized state as that when it is incident. The isotropic section 47 is configured so as to have an isotropic property with respect to both the first read light L1 and the second read light L2. Therefore, when the first read light L1 is incident on the isotropic section 47 of the second recording layer 42, the first read light L1 passes through the isotropic section 47 while maintaining the same polarized state as that when it is incident.

Since the birefringence label 12 has the above-mentioned structure, first read light L1a passing through the birefringence section 43 is converted into circularly polarized light, regardless of the kind of sections 46 and 47 that transmit the light in the second recording layer 42, and is then reflected from the reflecting film 40. Therefore, reflected light R1a of the first read light L1a becomes circularly polarized light that is rotated in the same direction as the first read light L1a and travels in a direction opposite to the traveling direction of the first read light L1a and passes through the birefringence section 43 through which the first read light L1a passes. In this case, the reflected light R1a is converted into linearly polarized light whose polarization direction is rotated 90 degrees with respect to the first read light L1a by the birefringence section 43 and is then incident on the polarizing plate 36 before the image sensor 38. However, as described above, since the polarizing plate 36 is arranged such that the direction of the transmission axis thereof is aligned with the polarizing plate 32 of the first light source 21, the reflected light R1a is absorbed by the polarizing plate 36 and does not reach the image sensor 38.

First read light L1b passing through the isotropic section 44 reaches the reflecting film 40 while maintaining the same polarized state as that when it is incident, regardless of the kind of sections 46 and 47 that transmit the light in the second recording layer 42, and is then reflected therefrom. Reflected light R1b of the first read light L1b is incident on the isotropic section 44 through which the first read light L1b passes, and passes through the isotropic section 44 while maintaining the same polarized state as that when it is incident. Then, the light is incident on the polarizing plate 36. Therefore, the reflected light R1b passes through the polarizing plate 36 and reaches the image sensor 38.

When the image of the birefringence label 12 is captured while the birefringence label 12 is illuminated with the first read light L1, an image 52 of the birefringence label 12 including only a reproduced first bar code 51 is captured to which only the distribution of the birefringence sections 43 and the isotropic sections 44 of the first recording layer 41 is reflected, as shown in Fig. 3B.

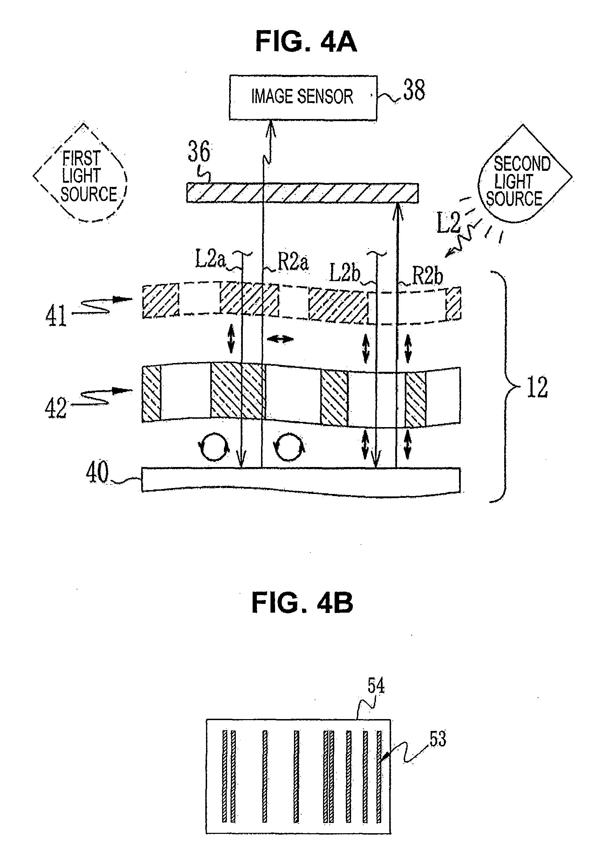

In this way, when the image 52 of the birefringence label 12 including only the reproduced first bar code 51 is captured, in the probe 13, the first light source 21 (LED 31) is turned off and the second light source 22 (LED 33) is turned on to emit the second read light L2 to the birefringence label 12, as shown in Figs. 4A and 4B. At the same time, the image of the birefringence label 12 is captured by the reflected light of the second read light L2 (second step). In Fig. 4A, the polarized states of the second read light L2 and the reflected light R2 thereof at each point are schematically represented by arrows.

As described above, in the birefringence label 12, only the birefringence section 46 of the second recording layer 42 has a birefringence property with respect to the second read light L2. Therefore, as shown in Fig. 4A, the second read light L2a passing through the birefringence section 46 of the second recording layer 42 is converted into circularly polarized light, regardless of the kind of sections 43 and 44 that transmit the light in the first recording layer 41, and is then reflected from the reflecting film 40. Reflected light R2a of the second read light L2a becomes circularly polarized light that is rotated in the same direction as the second read light L2a and travels in a direction opposite to the traveling direction of the second read light L2a, and passes through the birefringence section 46 through which the second read light L2a passes. In this case, the reflected light R2a is converted into linearly polarized light whose polarization direction is rotated 90 degrees with respect to the second read light L2a by the birefringence section 46 and is then incident on the polarizing plate 36.

Since the second read light L2 is linearly polarized light whose polarization direction is rotated 90 degrees with respect to the first read light L1, the reflected light R2a passing through the birefringence section 46 is linearly polarized light whose polarization direction is aligned with the transmission axis of the polarizing plate 36. Therefore, the reflected light R2a passes through the polarizing plate 36 and reaches the image sensor 38.

Second read light L2b passing through the isotropic section 47 of the second recording layer 42 reaches the reflecting film 40 while maintaining the same polarized state as that when it is incident, regardless of the kind of sections 43 and 44 that transmit the light in the first recording layer 41, and is then reflected therefrom. Reflected light R2b of the second read light L2b is incident on the isotropic section 47 through which the second read light L2b passes, and passes through the isotropic section 47 while maintaining the same polarized state as that when it is incident. Then, the light is incident on the polarizing plate 36. Therefore, the reflected light R2b is absorbed by the polarizing plate 36 and does not reach the image sensor 38.

When the image of the birefringence label 12 is captured while the birefringence label 12 is illuminated with the second read light L2, an image 54 of the birefringence label 12 including only a reproduced second bar code 53 is captured to which only the distribution of the birefringence sections 46 and the isotropic sections 47 of the second recording layer 42 is reflected, as shown in Fig. 4B.

After sequentially capturing the image 52 and the image 54 while emitting the first read light L1 and the second read light L2, the probe 13 recognizes a first bar code 51 and a second bar code 53 from the images 52 and 54 using the decoder 26 and acquires information, such as IDs recorded on the first and second bar codes 51 and 53. In addition, the information acquired from the birefringence label 12 is transmitted to the information input terminal 14 and is then stored in the DB 27 so as to be associated with the information input to the information input terminal 14.

As described above, the probe 13 can individually read the first bar code 51 and the second bar code 53 from the birefringence label 12 on which the first bar code 51 and the second bar code 53 are recorded so as to overlap each other.

In the above-described embodiment, the first light source 21 that emits the first read light L1 to the birefringence label 12 and the second light source 22 that emits the second read light L2 to the birefringence label 12 are independently provided, but the invention is not limited thereto. For example, the first light source 21 and the second light source 22 may be integrally formed according to the aspect of the birefringence label 12. The same components as those in the probe 13 according to the first embodiment are denoted by the same reference numerals as those in the first embodiment and a description thereof will be omitted.

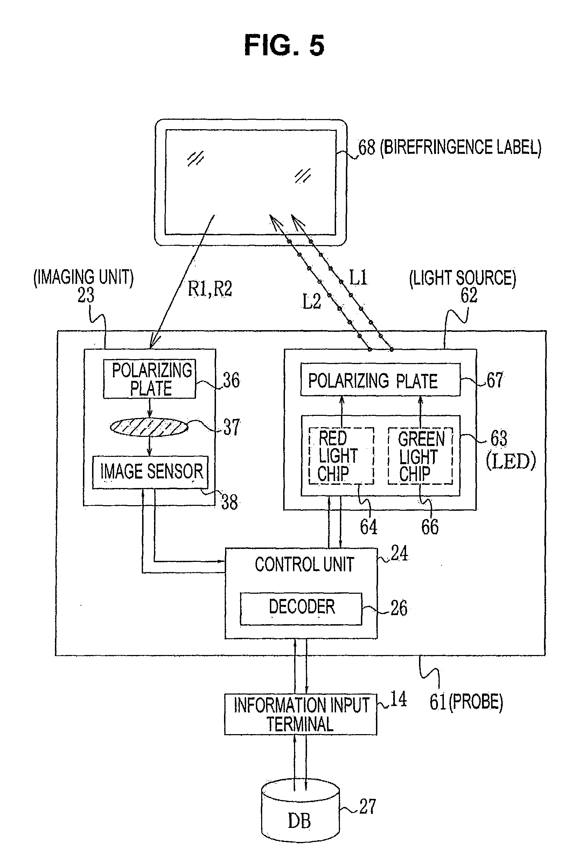

As shown in Fig. 5, a probe 61 includes a light source 62 instead of the first light source 21 and the second light source 22. The light source 62 includes an LED 63 and a polarizing plate 67. The LED 63 is one LED including two kinds of chips, that is, a red light chip 64 that emits red light and a green light chip 66 that emits green light, and the control unit 24 controls the LED 63 such that one of the two chips selectively emits light. The polarizing plate 67 is arranged such that the direction of the transmission axis thereof is substantially parallel to the short-side direction of the birefringence label 12, similar to the polarizing plate 36 of the imaging unit 23.

Therefore, in the probe 61, when the red light chip 64 emits red light, the first read light L1 is emitted from the light source 62 to the birefringence label 12, similar to the probe 13 according to the first embodiment. Therefore, it is possible to emit the first read light L1 to read the first bar code 51.

When the green light chip 66 emits green light, linearly polarized green light is emitted to the birefringence label 12. However, since the polarizing plate 67 is common to the green light chip 66 and the red light chip 64, the linearly polarized green light emitted to the birefringence label 12 becomes third read light L3 that has the same polarization direction as the first read light L1, but has a wavelength different from that of the first read light L1. Therefore, when the second recording layer having the second bar code 53 recorded thereon is formed using the birefringence sections that selectively act only on the third read light L3, it is possible to read the birefringence label 68 using the probe 61 in the same way as that in which the second bar code 53 is read using the second read light L2.

As in the birefringence label 68, when the first and second bar codes 51 and 53 are recorded by the distribution of the birefringence sections that selectively act on light components which have the same polarization direction but have different wavelengths and one light source 62 that emits a plurality of linearly polarized color light components is used, it is possible to form the probe 61 with a small size.

In the above-mentioned structure, one LED includes the red light chip 64 and the green light chip 66, but the invention is not limited thereto. The LED 31 that emits red light and the LED 33 that emits green light may be arranged adjacent to each other, and a common polarizing plate may be arranged in front of the LEDs.

In the above-described embodiment, when the birefringence label 12 is illuminated with the first read light L1 and the second read light L2, the common imaging unit 23 captures the image of the birefringence label 12, but the invention is not limited thereto. When the birefringence label 12 is illuminated with the first read light L1 and the second read light L2, the image of the birefringence label 12 may be captured by different image sensors. The same components as those in the probe 13 according to the above-described embodiment are denoted by the same reference numerals as those in the above-described embodiment and a description thereof will be omitted.

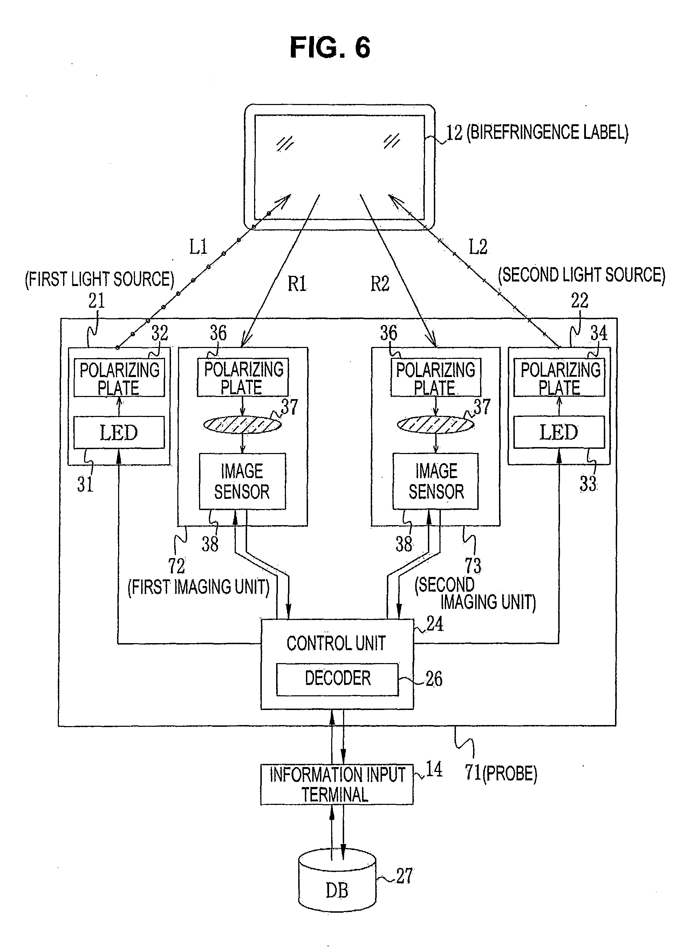

As shown in Fig. 6, a probe 71 includes two imaging units (light receiving units), that is, a first imaging unit 72 and a second imaging unit 73, instead of the imaging unit 23 of the probe 13. The first imaging unit 72 and the second imaging unit 73 have the same structure as the imaging unit 23 of the probe 13. Therefore, each of the first imaging unit 72 and the second imaging unit 73 includes a polarizing plate 36, a lens 37, and an image sensor 38 (a first optical sensor and a second optical sensor). When the first light source 21 emits the first read light L1 to the birefringence label 12, the image sensor 38 captures the image of the birefringence label 12 using the reflected light R1. Therefore, the first imaging unit 72 acquires the image 52 of the birefringence label 12 including the reproduced first bar code 51. When the second light source 22 emits the second read light L2 to the birefringence label 12, the second imaging unit 73 captures the image of the birefringence label 12 using the reflected light R2. Therefore, the second imaging unit 73 acquires the image 54 of the birefringence label 12 including the reproduced second bar code 53.

As described above, when the first imaging unit 72 and the second imaging unit 73 are provided, it is possible to independently perform the image capture of the birefringence label 12 by the first imaging unit 72 and the image capture of the birefringence label 12 by the second imaging unit 73. Therefore, it is possible to change the positions or angles of the first light source 21, the second light source 22, the first imaging unit 72, and the second imaging unit 73 such that the reflected light R1 is incident only on the first imaging unit 72 and the reflected light R2 is incident only on the second imaging unit 73, and it is possible to read the first bar code 51 and the second bar code 53 at the same time. In this way, it is possible to read a plurality of information items from the birefringence label 12 in a short time.

A color filter that selectively transmits only red light is provided in the first imaging unit 72, and a color filter that selectively transmits only green light is provided in the second imaging unit 73. In this case, similar to the above, it is possible to read the first bar code 51 and the second bar code 53. For example, a red color filter is arranged before the image sensor 38 of the first imaging unit 72, and a green color filter is arranged before the image sensor 38 of the second imaging unit 73. In this case, the first imaging unit 72 is adjacent to the second imaging unit 73. Even when the second reflected green light R2 is incident on the first imaging unit 72 or the first reflected red light R1 is incident on the second imaging unit 73, the first imaging unit 72 captures the image of the birefringence label 12 using only the first reflected red light R1, and the second imaging unit 73 captures the image of the birefringence label 12 using only the second reflected green light R2. Therefore, it is possible to simultaneously emit the first read light L1 and the second read light L2 to the birefringence label 12 and capture the images of the first bar code 51 and the second bar code 53 at the same time using the first imaging unit 72 and the second imaging unit 73. In this way, it is possible to read a plurality of information items from the birefringence label 12 in a short time.

In the above-described embodiment, the probe 13 reads the first and second bar codes 51 and 53 from the reflective birefringence label 12, but the invention is not limited thereto. The birefringence label may be a transmissive type.

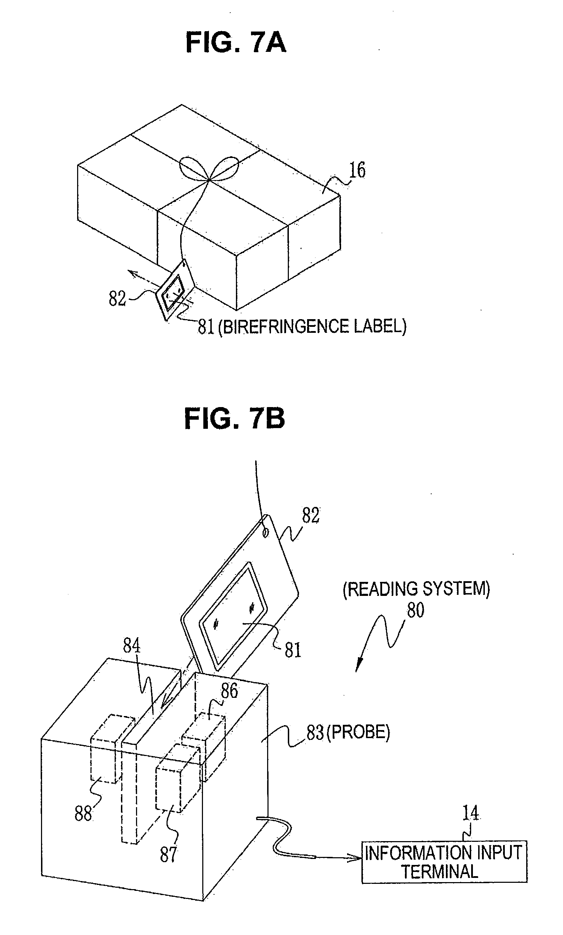

As shown in Fig. 7A, a birefringence label 81 is a transmissive label in which light incident on one surface is emitted from the other surface, and is incorporated in a predetermined direction into, for example, a price tag 82 attached to the article 16. Similar to the reflective birefringence label 12, the first bar code 51 and the second bar code 53 are recorded on the birefringence label 81 so as to overlap each other according to the distribution of the birefringence bodies. However, the detailed distribution of the birefringence bodies in the birefringence label 81 is determined such that the first and second bar codes 51 and 53 are reproduced by transmitted light.

As shown in Fig. 7B, a reading system 80 reads each information item from the transmissive birefringence label 12 on which a plurality of information items is recorded so as to overlap each other, and records information on the transmissive birefringence label 12. The reading system 80 includes a probe 83 and the same information input terminal 14 as that in the above-described embodiment. The probe 83 includes a concave portion 84 into which the birefringence label 81 of each price tag 82 is inserted. The inner wall of the concave portion 84 is made of a transparent and isotropic material. The information input terminal 14 is the same as that in the above-described embodiment.

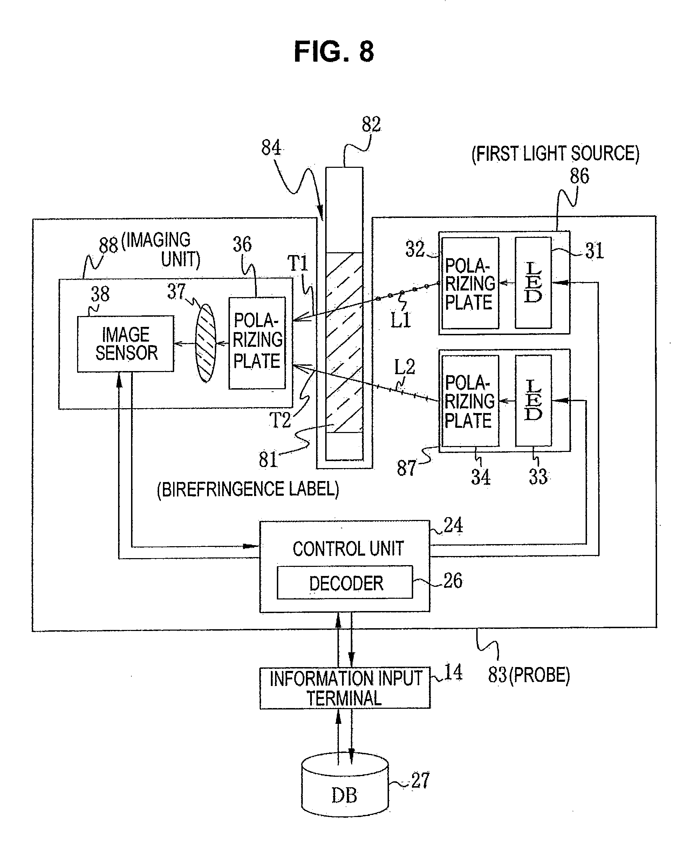

As shown in Fig. 8, the probe 83 includes a first light source 86, a second light source 87, an imaging unit 88, and a control unit 24. The first light source 86 and the second light source 87 have the polarizing plates 32 and 34 and the LEDs 31 and 33, similar to the first light source 21 and the second light source 22 according to the above-described embodiment. The first light source 86 and the second light source 87 are arranged on one side of the concave portion 84 such that the first read light L1 and the second read light L2 are emitted substantially in the vertical direction to the transmissive birefringence label 81 that is inserted into the concave portion 84. The imaging unit 88 includes the polarizing plate 36, the lens 37, and the image sensor 38, similar to the imaging unit 23 according to the above-described embodiment, and is arranged on the other side of the concave portion 84 so as to face the first light source 86 and the second light source 87 with the concave portion 84 interposed therebetween.

Therefore, when the price tag 82 is inserted into the concave portion 84, the probe 83 controls the first light source 86 to emit the first read light L1 to the birefringence label 81 and captures the image of the birefringence label 81 using transmitted light T1 that is emitted substantially in the vertical direction from the birefringence label 81. In this way, similar to the above-described embodiment, the image of the birefringence label 81 including only the reproduced first bar code 51 is acquired. The probe 83 controls the second light source 87 to emit the second read light L2 to the birefringence label 81 and captures the image of the birefringence label 81 using transmitted light T2 that is emitted substantially in the vertical direction from the birefringence label 81. In this way, similar to the above-described embodiment, the image of the birefringence label 81 including only the reproduced second bar code 53 is acquired. The first and second bar codes 51 and 53 are read from the acquired images and information is acquired and recorded, which is performed in the same way as that in the above-described embodiment.

In the above-described embodiment, the probe 83 includes two light sources 86 and 87 and one imaging unit 88, but the invention is not limited thereto. For example, as modifications of the above-described embodiment, the first light source 21 and the second light source 22 are integrally formed, or the first imaging unit 72 and the second imaging unit 73 are provided so as to respectively correspond to the first light source 21 and the second light source 22. In the modifications, the concave portion 84 may be formed in the probe, and the light source and the imaging unit may be arranged such that the light source and the imaging unit face each other with the concave portion 84 interposed therebetween. In this case, it is possible to read information from the transmissive birefringence label 81.

In the above-described embodiment and modifications, two kinds of bar code, that is, the first bar code 51 and the second bar code 53 are recorded on the birefringence label 12, and information is read from the bar codes. However, the invention is not limited thereto. For example, one kind of bar code may be recorded on the birefringence label, information may be read from the bar code, and the image of the birefringence label may be captured using non-polarized light. In this case, the state in which the birefringence label reproduces no information under the polarized light may be treated as one information item. In addition, the second bar code may be drawn on the reflecting film 40 with, for example, ink, not the distribution of the birefringence bodies such that non-polarized light, such as natural light, is incident without passing through the polarizing plate and the bar code can be observed by reflected light of the incident light, and information may be read from the second bar code in the image captured by the non-polarized light. When the non-polarized read light is emitted to the birefringence label, the polarizing plate 36 may be movably provided such that it is moved to a covering position where it covers the front surface of the image sensor 38 when the first read light L1 is emitted and it is retreated to an exposure position where the front surface of the image sensor 38 is exposed when the non-polarized second read light is emitted.

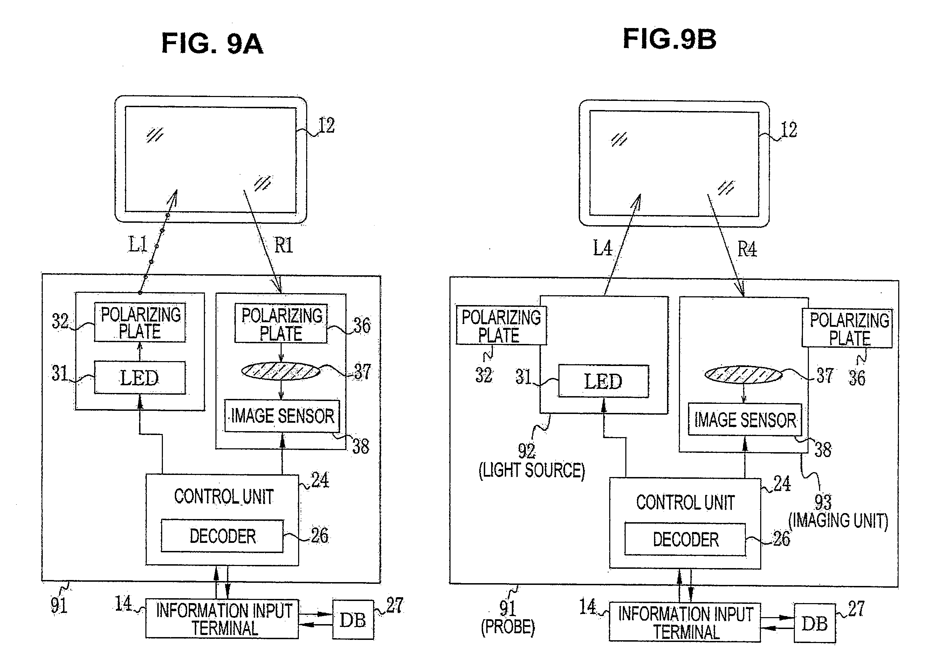

As such, when the image captured by the non-polarized light is acquired, as shown in Figs. 9A and 9B, it is preferable that a probe include one light source and one imaging unit and the light source and the polarizing plate of the imaging unit be movable between the covering position and the exposure position. As shown in Figs. 9A and 9B, a probe 91 includes one light source 92 and an imaging unit 93, instead of the first and second light sources 21 and 22 and the imaging unit 23 according to the above-described embodiment. The light source 92 includes the LED 31 and the polarizing plate 32, similar to the first light source 21 according to the above-described embodiment. The polarizing plate 32 is provided so as to be movable between the covering position (Fig. 9A) where it covers the front surface of the LED 31 and the exposure position (Fig. 9B) where the front surface of the LED 31 is exposed. Therefore, the light source 92 functions as a light source (first light source) that emits the first read light L1, which is linearly polarized red light, and also functions as a light source (second light source) that emits non-polarized light. The imaging unit 93 includes the polarizing plate 36, the lens 37, and the image sensor 38, similar to the imaging unit 23 according to the above-described embodiment. The polarizing plate 36 is provided so as to be movable between the covering position (Fig. 9A) where it covers the front surface of the image sensor 38 and the exposure position (Fig. 9B) where the front surface of the image sensor 38 is exposed.

When information is read from the birefringence label 12 by the probe 91 having the above-mentioned structure, as shown in Fig. 9A, first, each of the polarizing plates 32 and 36 is arranged at the covering position, the first read light L1 is emitted to the birefringence label 12, and the image of the birefringence label 12 is captured by the reflected light R1 of the first read light L1. In this way, the image of the birefringence label 12 including the reproduced first bar code 51 is acquired. Then, the information of the first bar code 51 is read by the same method as that in the above-described embodiment. Then, as shown in Fig. 9B, each of the polarizing plates 32 and 36 is retreated to the exposure position, the non-polarized red light L4 is emitted to the birefringence label 12, and the image of the birefringence label 12 is captured by the reflected light R4 of the non-polarized red light L4. In this way, the image of the birefringence label 12 including neither the first bar code 51 nor the second bar code 53 is acquired, and it is checked that the bar codes 51 and 53 are not reproduced from the birefringence label 12. In this way, for example, it is checked that the previously read first bar code 51 is not an illegal bar code that is drawn with, for example, ink, but is a legal bar code that is drawn by the distribution of the birefringence bodies, and it is possible to store information in the database 27.

In the above-described embodiment and modifications, the polarizing plate 36 of the imaging unit 23 is arranged such that the transmission axis thereof is aligned with the polarizing axis of the polarizing plate 32 of the first light source 21. However, the polarizing plate 36 of the imaging unit 23 may be rotatably arranged, and the direction of the transmission axis may vary depending on the polarization direction of the read light emitted to the birefringence label 12. Similarly, in the above-described embodiment, the polarizing plates 32 and 34 of the first light source 21 and the second light source 22 are arranged such that the directions of the transmission axes are fixed. However, similar to the above, the polarizing plates 32 and 34 may be rotatably arranged such that the directions of the transmission axes thereof are changed.

Instead of rotating the direction of the transmission axis of the polarizing plate, a liquid crystal element, which is a combination of liquid crystal and one polarizing plate, may be used to select the polarization direction of linearly polarized light, according to whether a voltage is applied to the liquid crystal. For example, in the first light source 21 (Fig. 2) according to the above-described embodiment, instead of the polarizing plate 32, a liquid crystal element, which is a combination of TN liquid crystal and one polarizing plate 32, is arranged in the order of the polarizing plate 32 and the TN liquid crystal from the LED 31. In this case, with no voltage applied to the TN liquid crystal, linearly polarized light (read light L1) whose polarization direction is parallel to the direction of the transmission axis of the polarizing plate 32 is emitted from the first light source 21. With a voltage applied to the TN liquid crystal, linearly polarized light whose polarization direction is vertical to the direction of the transmission axis of the polarizing plate 32 is emitted from the first light source 21. In this embodiment, the TN liquid crystal is given as an example, but other types of liquid crystal may be used.

In the above-described embodiment and modifications, two kinds of bar code are recorded on the birefringence label 12 so as to overlap each other, and information is read from each of the bar codes. However, the probes 13, 61, 71, and 83 according to the above-described embodiment and modifications may be appropriately used to read information from the birefringence label having one kind of bar code recorded thereon. In addition, the probes 13, 61, 71, and 83 according to the above-described embodiment and modifications may be appropriately used to read information from the birefringence label on which the bar code is recorded in the lateral direction.

In the above-described embodiment and modifications, two kinds of bar code are read from the birefringence label 12, but the invention is not limited thereto. Three or more kinds of information may be recorded on the birefringence label 12 in advance, and the three or more kinds of information may be read from the birefringence label 12. In this case, it is necessary to increase the kinds (the polarized state, the polarization direction, or the wavelength) of read light emitted to the birefringence label 12 according to the number of information items read from the birefringence label 12.

In the above-described embodiment and modifications, information is read from the birefringence label 12 with the probe 13 fixed with respect to the birefringence label 12. However, the probe 13 may read information while being moved relative to the birefringence label 12. For example, the probe 13 may be formed with a small size and information may be read from the birefringence label 12 while the leading end 17 slides along the birefringence label 12. In addition, the probe 13 may be fixed and information may be read from the birefringence label 12 while the birefringence label 12 slides with respect to the leading end 17 of the probe 13.

In the above-described embodiment and modifications, the first read light L1 is emitted to capture the image of the birefringence label 12, and the information of the first bar code 51 is read. Then, the second read light L2 is emitted to capture the image of the birefringence label 12 and the information of the second bar code 53 is read. However, the order in which the images are captured or the read timing of the information is not limited thereto. For example, in the reverse order of the above-described embodiment, the second read light L2 may be emitted to capture the image and then the first read light L1 is emitted to the capture the image. In addition, information is read after the image capture, but the invention is not limited thereto. After the image capture with the first read light L1 and the image capture with the second read light L2 are completed, the information of the bar codes 51 and 53 may be read from each of the captured images.

In the above-described embodiment and modifications, the birefringence label 12 has a rectangular shape, but the invention is not limited thereto. The birefringence label 12 may have any shape. However, when the birefringence label 12 has a symmetrical shape, such as a square shape or a circular shape, it is preferable that, for example, a marker designating the approach direction of the probe be provided such that information can be read from the birefringence label 12.

In the above-described embodiment and modifications, the area image sensor (image sensor 38) is used as the imaging unit 23. However, any component may be used as the imaging unit 23 long as it can receive light from the birefringence label 12. For example, instead of the image sensor 38, a line sensor or a PD (photodiode) may be used as the imaging unit 23.

In the above-described embodiment and modifications, the LED is used as the light source that emits read light to the birefringence label. However, an LD or a lamp may be used instead of the LED.

In the above-described embodiment and modifications, the bar code is recorded on the birefringence label 12, and information is read from the bar code. However, a two-dimensional code or any image may be recorded on the birefringence label 12 and information may be read from the image.

## Claims

1. A reproduced image reading device comprising:
a first light source that emits first read light, which is linearly polarized light having a predetermined polarization direction and a predetermined wavelength, to a recording medium, wherein different images are reproduced from the recording medium based on a polarization direction and a wavelength of linearly polarized light emitted thereto;
a second light source that emits second read light having a polarized state, a polarization direction, and a wavelength, at least one of which is different from that of the first read light, to the recording medium at a time different from that of the first read light; and
a light receiving unit, wherein when at least the first read light is emitted, the light receiving unit receives light from the recording medium through a polarizing filter having a transmission axis that is aligned with such a direction that linearly polarized light having the polarization direction of the first read light passes through the polarizing filter.

2. The reproduced image reading device according to claim 1,
wherein the light receiving unit includes one optical sensor common to the first read light and the second read light.

3. The reproduced image reading device according to claim 1,
wherein the light receiving unit includes:
a first optical sensor that has the polarizing filter formed on a front surface thereof, receives the light from the recording medium when the first read light is emitted, and reads a reproduced image; and
a second optical sensor that is provided separately from the first optical sensor, receives light from the recording medium when the second read light is emitted, and reads a reproduced image.

4. The reproduced image reading device according to claim 1 or 2,
wherein the first light source and the second light source are integrally formed and emit the first read light and the second read light to the recording medium substantially at the same position and substantially in the same direction.

5. The reproduced image reading device according to any one of claims 1 to 4,
wherein the second read light is linearly polarized light whose polarization direction is different from that of the first read light.

6. The reproduced image reading device according to any one of claims 1 to 5,
wherein the second read light is linearly polarized light that has the same polarization direction as the first read light and has the wavelength different from that of the first read light.

7. The reproduced image reading device according to any one of claims 1 to 5,
wherein the second read light is non-polarized light.

8. The reproduced image reading device according to any one of claims 1 to 7,
wherein the optical sensor and the recording medium are moved relative to each other to read a reproduced image from one side of the recording medium.

9. The reproduced image reading device according to claim 7,
wherein the polarizing filter is provided so as to be movable between a covering position where the polarizing filter covers a front surface of the optical sensor and an exposure position where the front surface of the optical sensor is exposed, and
the polarizing filter is moved to the covering position when the first read light is emitted and is moved to the exposure position when the second read light is emitted.

10. The reproduced image reading device according to any one of claims 1 to 5,
wherein the polarizing filter is provided in front of the optical sensor such that the transmission axis thereof can be rotated to two directions in which the polarizing filter transmits the first read light and the second read light, respectively.

11. The reproduced image reading device according to claim 10,
wherein the polarizing filter is a liquid crystal filter that changes the direction of the transmission axis according to a voltage applied to liquid crystal.

12. A method of reading a reproduced image, comprising:
a first step of
emitting first read light, which is linearly polarized light having a predetermined polarization direction and a predetermined wavelength, to a recording medium, wherein different images are reproduced from the recording medium based on a polarization direction and a wavelength of linearly polarized light emitted thereto, and
reading a reproduced image corresponding to
the first read light; and
before or after the first step, a second step of emitting second read light having a polarized state, a polarization direction, and a wavelength, at least one of which is different from that of the first read light, to the recording medium and reading a reproduced image corresponding to the second read light.
